# EUROPEAN PATENT APPLICATION

(11) **EP 4 726 775 A1**
(43) Date of publication of application: **15.04.2026**
(21) Application number: 25168189.6
(22) Date of filing: 03.04.2025
(51) Int. Cl.: H01L 23/522, H01L 23/528, H01L 23/64, H01L 23/66, H10D 1/68, H10D 84/00

(54) **CAPACITORS WITH ELECTRICALLY INACTIVE METAL LAYERS**

(30) Priority: 14.10.2024 US 202418914322
(71) Applicant: GlobalFoundries Singapore Pte. Ltd., Singapore 738406 (SG)
(72) Inventor: Yi, Wanbing, 738406 Singapore (SG); Khor, Ee Jan, 738406 Singapore (SG)
(74) Representative: Grünecker Patent- und Rechtsanwälte PartG mbB

(57) **Abstract**

The disclosed subject matter relates generally to structures in semiconductor devices and integrated circuit (IC) chips. More particularly, the present disclosure relates to a metal-dielectric-metal capacitor having electrically inactive metal layers arranged in an interconnect level that is below another interconnect level containing two sets of metal lines interdigitated with each other.

## Description

### FIELD OF THE INVENTION

The present disclosure relates generally to structures in semiconductor devices and integrated circuit (IC) chips. More particularly, the present disclosure relates to a metal-dielectric-metal capacitor having electrically inactive metal layers arranged in an interconnect level that is below another interconnect level containing two sets of metal lines interdigitated with each other.

### BACKGROUND

Rapid advances in electronics technologies and semiconductor fabrication processes, driven by immense customer demand, have resulted in the worldwide adoption of electronic devices. At the same time, fabrication processes continue to achieve smaller dimensions. One of the components in an integrated circuit chip is the capacitor. Improvements in capacitor fabrication techniques can allow the creation of capacitors with accurate and consistent capacitance values as the fabrication dimensions continue to shrink. As fabrication dimensions shrink, the spacing between adjacent metals formed during the back end of line (BEOL) processes decreases, and the decreased spacing may increase the occurrence of a breakdown in the dielectric between the adjacent metals, in high voltage applications for example.

An approach to prevent the breakdown between the adjacent metals is to create a region of dielectric material below and above the metals of the capacitor. However, to comply with the minimum density design rule of semiconductor fabrication, the area of an individual parametrized cell (Pcell) containing the capacitor needs to be restricted, thereby lowering design flexibility. Additionally, the spacing rules between adjacent Pcells must be kept above a minimum value, which may cause a larger circuit footprint and wasted board space between adjacent Pcells.

### SUMMARY

In an aspect of the present disclosure, there is provided a structure in a semiconductor device having a first interconnect level above a substrate, a first plurality of metal layers in the first interconnect level, in which the metal layers in the first plurality of metal layers are electrically inactive, a second interconnect level above the first interconnect level, and a second plurality of metal layers in the second interconnect level, the second plurality of metal layers including a first set of metal lines interdigitated with a second set of metal lines. Each metal layer in the first plurality of metal layers is only aligned vertically below each metal line in the first set of metal lines of the second plurality of metal layers.

In another aspect of the present disclosure, there is provided a structure in a semiconductor device having a first interconnect level above a substrate, a first plurality of metal layers in the first interconnect level, in which the metal layers in the first plurality of metal layers are electrically inactive, a second interconnect level above the first interconnect level, and a second plurality of metal layers in the second interconnect level. Each metal layer in the first plurality of metal layers is positioned equidistant to two immediately adjacent metal layers in the second plurality of metal layers.

### BRIEF DESCRIPTION OF THE DRAWINGS

The present disclosure may be understood by reference to the following description taken in conjunction with the accompanying drawings.

For simplicity and clarity of illustration, the drawings illustrate the general manner of construction, and certain descriptions and details of features and techniques may be omitted to avoid unnecessarily obscuring the discussion of the described embodiments of the present disclosure. Additionally, elements in the drawings are not necessarily drawn to scale. For example, the dimensions of some of the elements in the drawings may be exaggerated relative to other elements to help improve understanding of embodiments of the present disclosure. The same reference numerals in different drawings denote the same elements, while similar reference numerals may, but do not necessarily, denote similar elements.
FIG. 1 is a cross-sectional view of an example structure in a semiconductor device.
FIG. 2 is a cross-sectional view of another example structure in a semiconductor device.
FIG. 3 is a cross-sectional view of yet another example structure in a semiconductor device.
FIG. 4 is a cross-sectional view of another example structure in a semiconductor device.
FIG. 5AA, FIG. 5B, FIG. 5C are top-down views depicting example layout arrangements of metal layers in the example structures illustrated in FIG. 1 and FIG. 2.
FIG. 5AB, FIG. 5B, FIG. 5C are top-down views depicting example layout arrangements of metal layers in the example structures illustrated in FIG. 3 and FIG. 4.
FIG. 5D is a top-down view depicting an example layout arrangement of a plurality of metal layers in an interconnect level of the example structures illustrated in FIG. 1 and FIG. 4.
FIG. 6A, FIG. 6B, and FIG. 6C are enlarged cross-sectional views depicting metal layers in the interconnect levels of the example structures in FIG. 1, FIG. 2, FIG. 3, and FIG. 4.
FIG. 7 is a partial cross-sectional view of the example structure shown in FIG. 1 and depicts exemplary arrangements of metal layers in respective interconnect levels.
FIG. 8 is a partial cross-sectional view of the example structure shown in FIG. 2 and depicts exemplary arrangements of metal layers in respective interconnect levels.
FIG. 9 is a partial cross-sectional view of the example structure shown in FIG. 3 and depicts exemplary arrangements of metal layers in respective interconnect levels.
FIG. 10 is a partial cross-sectional view of the example structure shown in FIG. 4 and depicts exemplary arrangements of metal layers in respective interconnect levels.
FIG. 11 is a partial cross-sectional view depicting an example of a modification of the exemplary arrangements of metal layers in respective interconnect levels shown in FIG. 9 and FIG. 10.

### DETAILED DESCRIPTION

Various illustrative embodiments of the present disclosure are described below. The embodiments disclosed herein are exemplary and not intended to be exhaustive or limiting to the present disclosure.

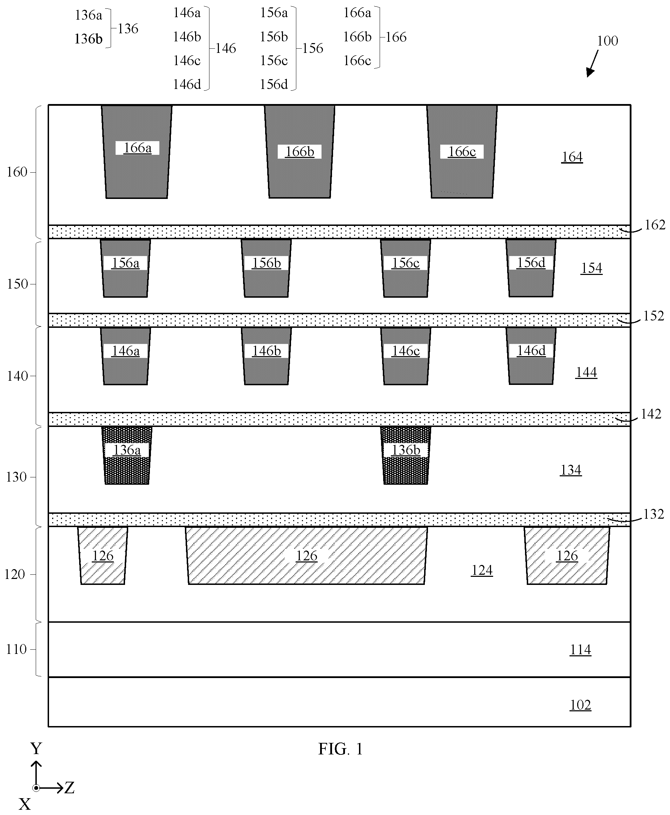

Referring to FIG. 1, FIG. 2, FIG. 3, and FIG. 4, examples of a structure 100 in a semiconductor device may include a first interconnect level 130 above a substrate 102, a first plurality of metal layers 136 in the first interconnect level 130, a second interconnect level 140 above the first interconnect level 130, and a second plurality of metal layers 146a, 146b, 146c, 146d in the second interconnect level 140. Other interconnect levels and a contact level may be formed in the structure 100. As used herein, the term "interconnect level" may refer to a level positioned in a back end of line (BEOL) region of an integrated circuit (IC) chip or semiconductor device containing interconnect structures formed in one or more inter-metal dielectric (IMD) layers.

Each of the interconnect levels disclosed herein may include a metallization level and a via level. The term "metallization level" may refer to a level in the BEOL region of the IC chip containing one or more layers of conductive material structured to provide routing of electrical signals between components or features in the IC chip. The metallization level may have an uppermost bound and a lowermost bound substantially coplanar with respective top and bottom surfaces of the one or more layers of conductive material therein. In certain implementations, the one or more layers of conductive material in each metallization level may be labeled as "Mx" lines, wherein the letter "x" in the term "Mx" is an integer referencing the metallization level which the one or more layers of conductive material are positioned in. The term "via level" may refer to a level in the BEOL region of the IC chip containing one or more interconnect vias structured to provide electrical connection between different metallization levels. The via level may have an uppermost bound and a lowermost bound substantially coplanar with respective top and bottom surfaces of the one or more interconnect vias therein. In certain implementations, the one or more interconnect vias in each via level may be labeled as "Vx" vias, wherein the letter "x" in the term "Vx" is an integer referencing the via level in which the one or more interconnect vias are positioned in.

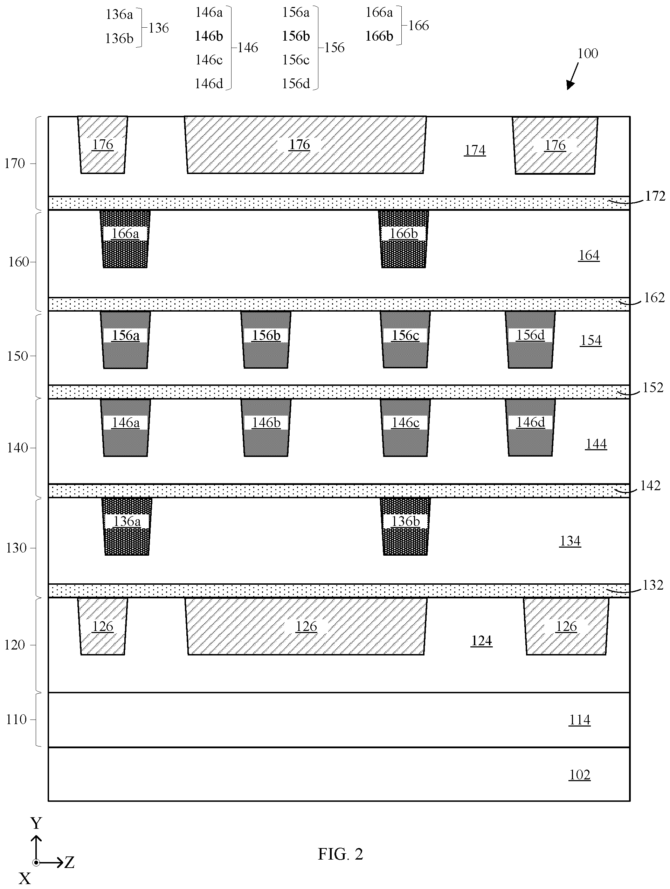

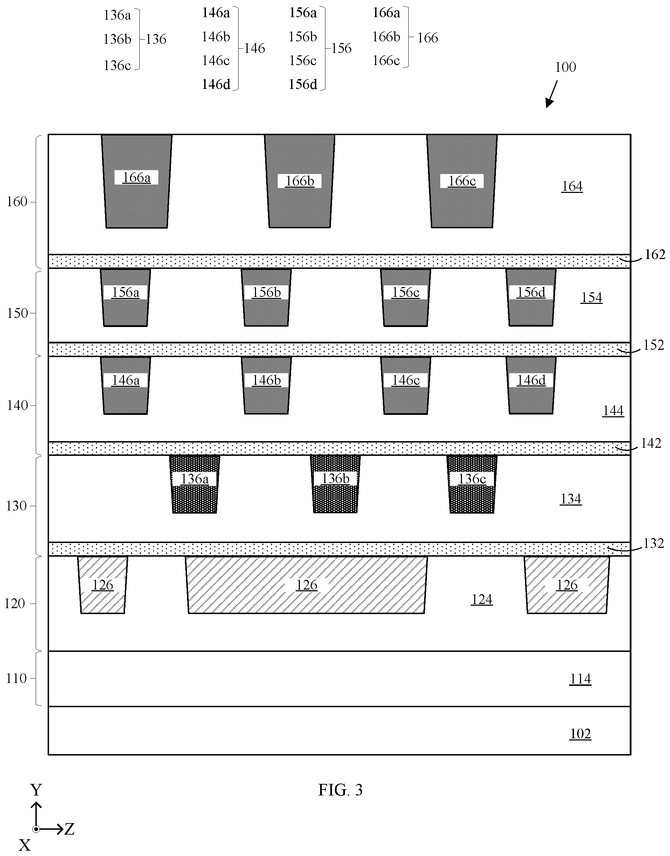

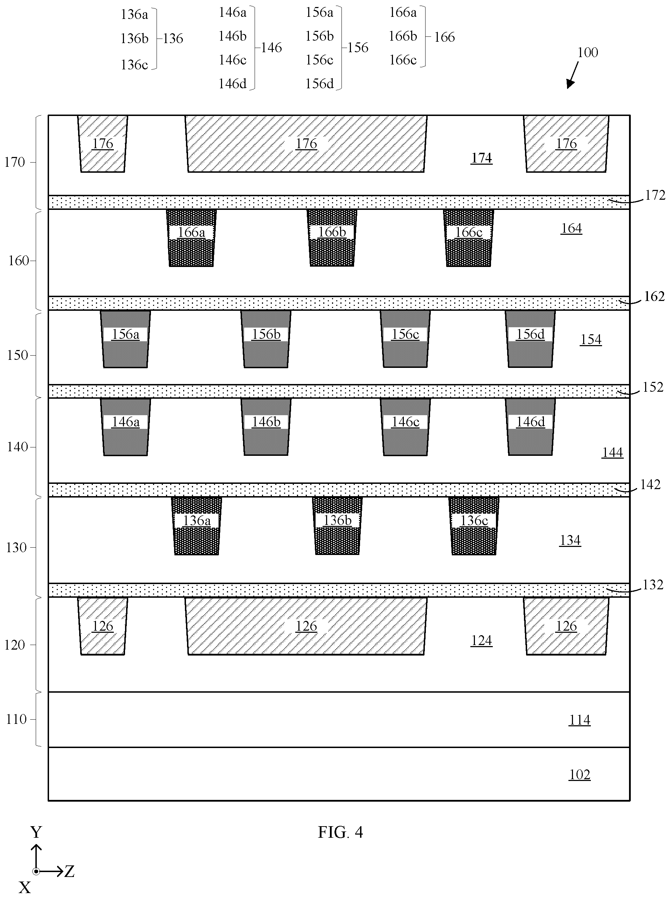

The structure 100 may include numerous interconnect levels. For example, an "n" number of interconnect levels may be formed in the structure 100. In the examples shown in FIG. 1 and FIG. 3, the structure 100 may include four interconnect levels 120, 130, 140, 150, in which the number "n" is 4, and a contact level 110. In the examples shown in FIG. 2 and FIG. 4, the structure 100 may include five interconnect levels 120, 130, 140, 150, 160, in which the number "n" is 5, and a contact level 110. Other numbers of interconnect levels may also be useful, and the illustrated structure 100 in FIG. 1, FIG. 2, FIG. 3, and FIG. 4 need not be limited to the number of interconnect levels shown in those respective figures. The number of interconnect levels formed in the structure 100 may depend on, for example, design requirements or the process involved. The interconnect levels described herein may be arranged vertically over one another.

In the examples shown in FIG. 1, FIG. 2, FIG. 3, and FIG. 4, the structure 100 may include a contact level 110 on the substrate 102. The contact level 110 may include a dielectric region 114 and various interconnect structures (not shown) for connection to transistors (not shown) formed on the substrate 102. In some implementations, the contact level 110 may be referred to as a "middle of line" region that provides electrical connections between features in BEOL and front end of line (FEOL) regions. The structure 100 may also include an interconnect level 120 below the first interconnect level 130. The interconnect level 120 may be vertically between the first interconnect level 130 and the contact level 110. The interconnect level 120 may include conductive lines 126 formed in an inter-metal dielectric 124. Although not shown in the accompanying drawings, the conductive lines 126 may be connected directly or indirectly to the interconnect structures in the contact level 110.

The structure 100 may also include interconnect levels above the second interconnect level 140. In the examples shown in FIG. 1 and FIG. 3, a third interconnect level 150 may be formed above the second interconnect level 140, and a fourth interconnect level 160 may be formed above the third interconnect level 150. A third plurality of metal layers 156a, 156b, 156c, 156d may be formed in the third interconnect level 150. A fourth plurality of metal layers 166a, 166b, 166c may be formed in the fourth interconnect level 160. Although not shown, the present disclosure also contemplates alternative embodiments in which the examples shown in FIG. 1 and FIG. 3 are modified to remove the intervening the interconnect level 150 (and the plurality of metal layers 156 formed therein) between the second interconnect level 140 and the fourth interconnect level 160. In other words, in the contemplated alternative embodiments, the fourth interconnect level 160 may be immediately above the second interconnect level 140.

In the examples shown in FIG. 2 and FIG. 4, a third interconnect level 150 may be formed above the second interconnect level 140, a fourth interconnect level 160 may be formed above the third interconnect level 150, and a fifth interconnect level 170 may be formed above the fourth interconnect level 160. A third plurality of metal layers 156a, 156b, 156c, 156d may be formed in the third interconnect level 150. A fourth plurality of metal layers 166a, 166b, 166c may be formed in the fourth interconnect level 160. The fifth interconnect level 170 may include conductive lines 176, inter-metal dielectric 174, and dielectric layer 172. Although not shown, the present disclosure also contemplates alternative embodiments in which the examples shown in FIG. 2 and FIG. 4 are modified to remove the intervening the interconnect level 150 (and the plurality of metal layers 156 formed therein) between the second interconnect level 140 and the fourth interconnect level 160. In other words, the fourth interconnect level 160 may be immediately above the second interconnect level 140.

Each of the interconnect levels 120, 130, 140, 150, 160, 170 may include one or more dielectric materials. Examples of dielectric materials in the interconnect levels described herein may include, but are not limited to, silicon dioxide, tetraethyl orthosilicate (TEOS), a material having a chemical composition of SiCₓO_{y}H_{z}, wherein x, y, and z are in stoichiometric ratio, silicon oxynitride (SiON), silicon nitride, Nitrogen doped silicon carbide (SiCN), SiCₓH_{z}, or SiN_{w}CₓH_{z}, wherein each of w, x, y, and z independently has a value greater than 0 and less than 0.75. Each of the interconnect levels 130, 140, 150, 160 may also include one or more dielectric layers. For example, interconnect level 130 may include dielectric layers 132 and 134, interconnect level 140 may include dielectric layers 142 and 144, interconnect level 150 may include dielectric layers 152 and 154, and interconnect level 160 may include dielectric layers 162 and 164. The dielectric layers in the respective interconnect levels may be formed using deposition techniques such as spin-on coating, sputtering, chemical vapor deposition (CVD), physical vapor deposition (PVD), molecular beam deposition (MBD), pulsed laser deposition (PLD), liquid source misted chemical deposition (LSMCD), atomic layer deposition (ALD). In some embodiments, within the same interconnect level, the dielectric layer 132 in the interconnect level 130 may have a different dielectric material from the dielectric layer 134 in the interconnect level 130. In other embodiments, between different interconnect levels, the dielectric layer 134 in the interconnect level 130 may have a different dielectric material from the dielectric layer 142 in the interconnect level 140.

The pluralities of metal layers 136, 146, 156, 166 and the conductive lines 126, 176 may include a metal, such as tantalum (Ta), ruthenium (Ru), cobalt (Co), copper (Cu), titanium (Ti), nickel (Ni), platinum (Pt), aluminum (Al), or an alloy thereof. Other suitable types of metal, alloys, or conductive materials may also be useful. The metal layers 136, 146, 156, 166 and the conductive lines 126, 176 may be formed in the dielectric materials of the respective interconnect levels, for example, using a damascene process (e.g., a single damascene or a dual damascene). Other processing steps, such as reactive ion etch (RIE), chemical mechanical polishing (CMP), electroplating, and deposition techniques (e.g., sputtering, CVD, PVD, MBD, PLD, LSMCD, ALD) may be used.

In the examples shown in FIG. 1, FIG. 2, FIG. 3, and FIG. 4, the second interconnect level 140 may be formed immediately above the first interconnect level 130. The term "immediately above" may refer to the absence of any intervening interconnect level(s) vertically between the first interconnect level 130 and the second interconnect level 140. For example, in embodiments where the second interconnect level 140 is immediately above the first interconnect level 130, the first interconnect level 130 may include a first dielectric layer 134, the second interconnect level may include a second dielectric layer 142, and the second dielectric layer 142 in the second interconnect level 140 may be directly on the first dielectric layer 134 in the first interconnect level 130. Likewise, the third interconnect level 150 may be formed immediately above the second interconnect level 140, the fourth interconnect level 160 may be formed immediately above the third interconnect level 150, and in the examples shown in FIG. 2 and FIG. 4, the fifth interconnect level 170 may be formed immediately above the fourth interconnect level 160.

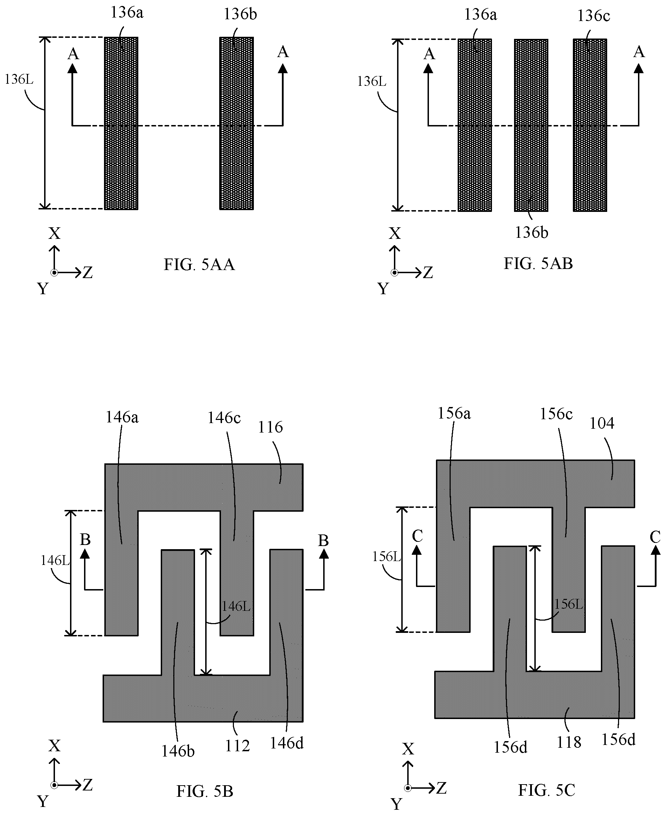

FIG. 5AA depicts the example layout arrangements of the metal layers in the first plurality of metal layers of the structures illustrated in FIG. 1 and FIG. 2. Line A-A indicates the cross-section corresponding to the view shown in FIG. 1 and FIG. 2 concerning the metal layers 136a, 136b. With reference to FIG. 5AA together with FIG. 1 and FIG. 2, the metal layers 136a, 136b in the first plurality of metal layers 136 may be electrically inactive (i.e., electrically floating). In other words, the metal layers 136a, 136b may not be connected to a voltage source or a current source. The metal layers 136a, 136b may also be devoid of any polarity (i.e., a positive or negative charge). In an example, the first interconnect level 130 may have a first dielectric layer 134, and the second interconnect level 140 may have a second dielectric layer 142. Each metal layer 136a, 136b in the first plurality of metal layers 136 may be completely covered by and in direct contact with the first dielectric layer 134 and the second dielectric layer 142. This may advantageously ensure that the metal layers 136a, 136b in the first plurality of metal layers 136 are electrically inactive and not in direct contact with any interconnect vias.

FIG. 5AB depicts the example layout arrangements of the metal layers in the first plurality of metal layers of the structures illustrated in FIG. 3 and FIG. 4. Line A-A indicates the cross-section corresponding to the view shown in FIG. 3 and FIG. 4 concerning the metal layers 136a, 136b, 136c. With reference to FIG. 5AB together with FIG. 3 and FIG. 4, the metal layers 136a, 136b, 136c in the first plurality of metal layers 136 may be electrically inactive. In other words, the metal layers 136a, 136b, 136c may not be connected to a voltage source or a current source. The metal layers 136a, 136b, 136c may also be devoid of any polarity (i.e., a positive or negative charge). In an example, the first interconnect level 130 may have a first dielectric layer 134, and the second interconnect level 140 may have a second dielectric layer 142. Each metal layer 136a, 136b, 136c in the first plurality of metal layers 136 may be completely covered by and in direct contact with the first dielectric layer 134 and the second dielectric layer 142. This may advantageously ensure that the metal layers 136a, 136b, 136c in the first plurality of metal layers 136 are electrically inactive and not in direct contact with any interconnect vias.

FIG. 5B and FIG. 5C depict the example layout arrangements of the respective metal layers in the second and third pluralities of metal layers of the structures illustrated in FIG. 1, FIG. 2, FIG. 3, and FIG. 4. Line B-B indicates the cross-section corresponding to the view shown concerning the metal layers 146a, 146b, 146c, 146d. Line C-C indicates the cross-section corresponding to the view shown concerning the metal layers 156a, 156b, 156c, 156d. With reference to FIG. 5B and FIG. 5C together with FIG. 1 through FIG. 4, the metal layers 146a, 146b, 146c, 146d in the second plurality of metal layers 146 and the metal layers 156a, 156b, 156c, 156d in the third plurality of metal layers 156 may be configured as a capacitor (e.g., a metal-oxide-metal capacitor or a metal-insulator-metal capacitor). For example, the second plurality of metal layers 146 may include a first set of metal lines 146a, 146c interdigitated with a second set of metal lines 146b, 146d. The first set of metal lines 146a, 146c may be connected to a wiring line 116 and may be biased with a first voltage. The second set of metal lines 146b, 146d may be connected to a wiring line 112 and may be biased with a second voltage, in which the second voltage may be higher than the first voltage. In some embodiments, the first voltage may be described as a low voltage (e.g., having a voltage value below 10V) and the second voltage may be described as a high voltage (e.g., having a voltage value above 30V). In an alternative implementation, the second plurality of metal layers 146 may include alternating metal lines of different voltages.

Similarly, the third plurality of metal layers 156 may include a third set of metal lines 156a, 156c interdigitated with a fourth set of metal lines 156b, 156d. The third set of metal lines 156a, 156c may be connected to a wiring line 104 and may be biased with the first voltage. The fourth set of metal lines 156b, 156d may be connected to a wiring line 118 and may be biased with the second voltage. In an alternative implementation, the third plurality of metal layers 156 may include alternating metal lines of different voltages. In contrast, since the metal layers 136a, 136b (shown in FIG. 1 and FIG. 3), and 136c (shown in FIG. 2 and FIG. 4) in the first plurality of metal layers 136 are electrically inactive, none of the metal layers 136a, 136b in the first plurality of metal layers 136 shown in FIG. 5AA and the metal layers 136a, 136b, 136c shown in FIG. 5AB may be connected to the wiring lines 112, 116, 104, 118 shown in FIG. 5B and FIG. 5C. The wiring line 116 shown in FIG. 5B may be connected to the wiring line 104 shown in FIG. 5C by a vertical interconnect or an interconnect via (not shown in the accompanying drawings). Similarly, the wiring line 112 shown in FIG. 5B may be connected to the wiring line 118 shown in FIG. 5C by a vertical interconnect or an interconnect via (not shown in the accompanying drawings).

Referring to FIG. 5AA, FIG. 5AB, FIG. 5B, FIG. 5C, the metal layers 136a, 136b in the first plurality of metal layers 136 shown in FIG. 5AA, the metal layers 136a, 136b, 136c in the first plurality of metal layers 136 shown in FIG. 5AB, the metal layers 146a, 146b, 146c, 146d in the second plurality of metal layers 146, and the metal layers 156a, 156b, 156c, 156d in the third plurality of metal layers 156 may be structured as being elongated along a horizontal plane (e.g., the X-Z plane) parallel to a top surface of the substrate 102. Each of the metal layers 136a, 136b, 136c in the first plurality of metal layers 136 illustrated in FIG. 5AA and FIG. 5AB may be elongated with a longitudinal length 136L. Each of the metal layers 146a, 146b, 146c, 146d in the second plurality of metal layers 146 illustrated in FIG. 5B may be elongated with a longitudinal length 146L. Each of the metal layers 156a, 156b, 156c, 156d in the third plurality of metal layers 156 illustrated in FIG. 5C may be elongated with a longitudinal length 156L. In some embodiments, the length 136L of each metal layer in the first plurality of metal layers 136 may be substantially the same as the length 146L of each metal layer in the second plurality of metal layers 146, and substantially the same as the length of each metal layer in the third plurality of metal layers 156. The metal layers 146a, 146b, 146c, 146d in the second plurality of metal layers 146 may extend along the same direction (e.g., a direction along the x-axis) as, and may be parallel to, the metal layers 156a, 156b, 156c, 156d in the third plurality of metal layers 156. Each metal layer 136a, 136b, 136c in the first plurality of metal layers 136 may extend along the same direction (e.g., a direction along the x-axis) as, and may be parallel to, each respective metal line 146a, 146c in the first set of metal lines of the second plurality of metal layers 146.

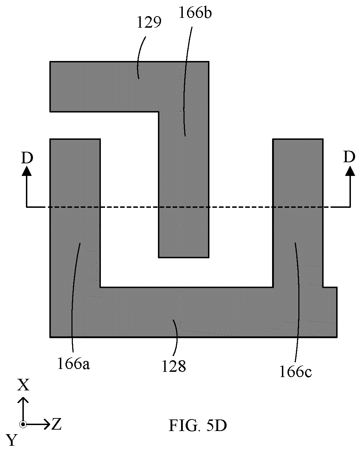

FIG. 5D depicts the example layout arrangements of the metal layers in the fourth plurality of metal layers of the structures illustrated in FIG. 1 and FIG. 3. Line D-D indicates the cross-section corresponding to the view shown in FIG. 1 and FIG. 3 concerning the metal layers 166a, 166b, 166c. Referring to FIG. 1 and FIG. 3 together with FIG. 5D, in some examples, the metal layers 166a, 166b, 166c in the fourth plurality of metal layers 166 formed in the fourth interconnect level 160 may also be configured as a capacitor (e.g., a metal-oxide-metal capacitor or a metal-insulator-metal capacitor). For example, the fourth plurality of metal layers 166 may include metal lines 166a, 166c interdigitated with a metal line 166b, in which the metal lines 166a, 166c may be connected to a wiring line 128 and may be biased with the first voltage, and metal line 166b may be connected to a wiring line 129 and may be biased with the second voltage. In an alternative implementation, the fourth plurality of metal layers 166 may include alternating metal lines of different voltages. Although the example in FIG. 5D shows a single metal line 166b connected to the wiring line 128, it should be understood that two or more metal lines can be connected to wiring line 128.

Referring to FIG. 2 and FIG. 4, in other examples, the metal layers 166a, 166b (shown in FIG. 2), and 166c (shown in FIG. 4) in the fourth plurality of metal layers 166 formed in the fourth interconnect level 160 may be electrically inactive, in contrast to being configured as a capacitor, or being biased with a voltage, as described in FIG. 1 and FIG. 3. As illustrated in FIG. 5AA together with FIG. 2, the metal layers 166a, 166b may not be connected to a voltage source or a current source. The metal layers 166a, 166b may also be devoid of any polarity (i.e., a positive or negative charge). Similar to the metal layers 136a, 136b in the first plurality of metal layers 136, the metal layers 166a, 166b in the fourth plurality of metal layers 166 may be structured as being elongated along a horizontal plane parallel to a top surface of the substrate 102. Each metal layer 166a, 166b in the fourth plurality of metal layers 166 may extend along the same direction (e.g., a direction along the x-axis) as, and may be parallel to, each respective metal line 146a, 146c in the first set of metal lines of the second plurality of metal layers 146.

As illustrated in FIG. 5AB together with FIG. 4, the metal layers 166a, 166b, 166c may not be connected to a voltage source or a current source. The metal layers 166a, 166b, 166c may also be devoid of any polarity (i.e., a positive or negative charge). Similar to the metal layers 136a, 136b, 136c in the first plurality of metal layers 136, the metal layers 166a, 166b, 166c in the fourth plurality of metal layers 166 may be structured as being elongated along a horizontal plane parallel to a top surface of the substrate 102. Each metal layer 166a, 166b, 166c in the fourth plurality of metal layers 166 may extend along the same direction (e.g., a direction along the x-axis) as, and may be parallel to, the metal layers 146a, 146b, 146c, 146d in the second plurality of metal layers 146.

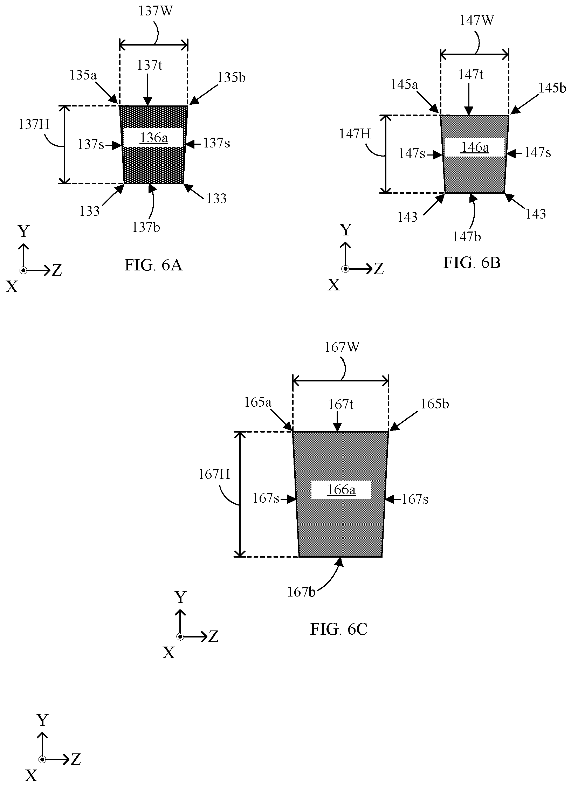

FIG. 6A is an enlarged cross-sectional view of each metal layer in the first plurality of metal layers 136 in the first interconnect level 130. Referring to FIG. 6A, using metal layer 136a as an illustrative example, each metal layer in the first plurality of metal layers 136 may have a top surface 137t, a bottom surface 137b, and side surfaces 137s. The side surfaces 137s may meet the top surface 137t at top edges 135a, 135b while the side surfaces 137s may meet the bottom surface 137b at bottom edges 133a, 133b. Each metal layer in the first plurality of metal layers 136 may have a line height 137H defined as a vertical distance between the top surface 137t and the bottom surface 137b, and a line width 137W defined as a horizontal distance between the top edges 135a, 135b, in which the horizontal distance traverses across the top surface 137t of the metal layer.

FIG. 6B is an enlarged cross-sectional view of each metal layer in the second plurality of metal layers 146 in the second interconnect level 140. Referring to FIG. 6B, using metal layer 146a as an illustrative example, each metal layer may have a top surface 147t, a bottom surface 147b, and side surfaces 147s. The side surfaces 147s may meet the top surface 147t at top edges 145a, 145b while the side surfaces 147s may meet the bottom surface 147b at bottom edges 143a, 143b. Each metal layer in the second plurality of metal layers 146 may have a line height 147H defined as a vertical distance between the top surface 147t and the bottom surface 147b, and a line width 147W defined as a horizontal distance between the top edges 145a, 145b, in which the horizontal distance traverses across the top surface 147t of the metal layer. In some embodiments, the line width 147W and line height 147H of each metal layer in the second plurality of metal layers 146 may be the same as the line width 137W and the line height 137H of each metal layer in the first plurality of metal layers 136. Although not illustrated in the accompanying drawings, each metal layer in the third plurality of metal layers 156 may be formed to have the same line width and line spacing as each metal layer in the second plurality of metal layers 146.

FIG. 6C is an enlarged cross-sectional view of each metal layer in the fourth plurality of metal layers 166 in the fourth interconnect level 160 of the structures shown in FIG. 1 and FIG. 3. Referring to FIG. 6C, using metal layer 166a as an illustrative example, each metal layer may have a top surface 167t, a bottom surface 167b, and side surfaces 167s. The side surfaces 167s may meet the top surface 167t at top edges 165a, 165b while the side surfaces 167s may meet the bottom surface 167b at bottom edges 163. Each metal layer in the fourth plurality of metal layers 166 may have a line height 167H defined as a vertical distance between the top surface 167t and the bottom surface 167b, and a line width 167W defined as a horizontal distance between the top edges 165a, 165b, in which the horizontal distance traverses across the top surface 167t of the metal layer. The line height 167H of each metal layer in the fourth plurality of metal layers 166 may be larger than the line height 137H of each metal layer in the first plurality of metal layers 136 and the line height 147H of each metal layer in the second plurality of metal layers 146. The line width 167W of each metal layer in the fourth plurality of metal layers 166 may be larger than the line width 137W of each metal layer in the first plurality of metal layers 136 and the line width 147W of each metal layer in the second plurality of metal layers 146.

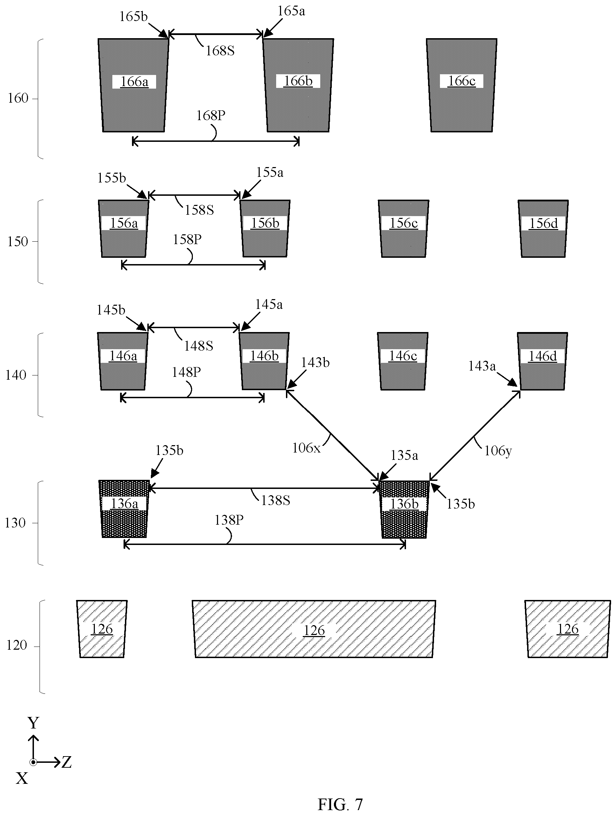

Referring to FIG. 7, FIG. 8, FIG. 9, and FIG. 10, the first plurality of metal layers 136 may have a line spacing 138S and a line pitch 138P, the second plurality of metal layers 146 may have a line spacing 148S and a line pitch 148P, the third plurality of metal layers 156 may have a line spacing 158S and a line pitch 158P, and the fourth plurality of metal layers 166 may have a line spacing 168S and a line pitch 168P. The line pitches 138P, 148P, 158P, 168P may be defined as a lateral distance measured between the centers of two immediately adjacent metal layers in the respective plurality of metal layers 136, 146, 156, 166 described herein. The line spacings 138S, 148S, 158S, 168S may be defined as the smallest lateral distance spacing apart two immediately adjacent metal layers in the respective plurality of metal layers 136, 146, 156, 166 described herein, in which the lateral distance may be measured between the top edges of the two immediately adjacent metal layers. As an illustrative example, the line spacing 138S in the first plurality of metal layers 136 may be measured from the top edge 135b of the metal layer 136a and the top edge 135a of the metal layer 136b. The line spacing 148S in the second plurality of metal layers 146 may be measured from the top edge 145b of the metal layer 146a and the top edge 145a of the metal layer 146b. The line spacing 158S in the third plurality of metal layers 156 may be measured from the top edge 155b of the metal layer 156a and the top edge 155a of the metal layer 156b. The line spacing 168S in the fourth plurality of metal layers 166 may be measured from the top edge 165b of the metal layer 166a and the top edge 165a of the metal layer 166b.

In some embodiments, each of the first, second, third, and fourth pluralities of metal layers 136, 146, 156, 166 may have a constant line spacing and a constant line pitch. Using the second plurality of metal layers 146 as an illustrative example to define the term "constant" when used with the line spacing and the line pitch, the line spacing and line pitch between metal layers 146a and 146b may be the same as the line spacing and line pitch between metal layers 146b and 146c, and the line spacing and line pitch between metal layers 146c and 146d.

In the examples shown in FIG. 1, FIG. 2, FIG. 3, and FIG. 4, the dielectric layer 134 in the first interconnect level 130 may be laterally between two immediately adjacent metal layers in the first plurality of metal layers 136. For example, each metal layer 136a in the first plurality of metal layers 136 may be separated from an immediately adjacent metal layer 136b by the dielectric layer 134 in the first interconnect level 130 or above the one or more dielectric material contained in the first interconnect level 130. The dielectric layer 144 in the second interconnect level 140 may be laterally between two immediately adjacent metal layers in the second plurality of metal layers 146. For example, each metal layer 146a, 146b, 146c, 146d in the second plurality of metal layers 146 may be separated from an immediately adjacent metal layer by the dielectric layer 144 in the second interconnect level 140. Similarly, the dielectric layer 154 in the third interconnect level 150 may be laterally between two immediately adjacent metal layers in the third plurality of metal layers 156. For example, each metal layer 156a, 156b, 156c, 156d in the third plurality of metal layers 156 may be separated from an immediately adjacent metal layer by the dielectric layer 154 in the third interconnect level 150. The term "immediately adjacent", when used herein to describe metal layer(s) in an interconnect level, refers to two metal layers laterally adjacent to each other within the same interconnect level, and there is/are no intervening metal layer(s) positioned laterally between those two metal layers. As an illustrative example, in the second interconnect level 140, metal layer 146a is immediately adjacent to metal layer 146b, and metal layer 146a is not immediately adjacent to metal layer 146c. The aforementioned illustrative example of the term "immediately adjacent" also applies to the metal layers in the respective interconnect levels 130, 150, 160.

Referring to FIG. 2 and FIG. 4, the dielectric layer 164 in the fourth interconnect level 160 may be laterally between two immediately adjacent metal layers in the fourth plurality of metal layers 166. For example, each metal layer 166a in the fourth plurality of metal layers 166 may be separated from an immediately adjacent metal layer 166b by the dielectric layer 164 in the fourth interconnect level 160 or above the one or more dielectric material contained in the fourth interconnect level 160. Each metal layer 166a, 166b, 166c in the fourth plurality of metal layers 166 may be completely covered by and in direct contact with the dielectric layers 164 in the fourth interconnect level 160 and the dielectric layer 172 in the fifth interconnect level 170. This may advantageously ensure that the metal layers 166a, 166b, 166c in the fourth plurality of metal layers 166 are electrically inactive and not in direct contact with any interconnect vias. The fourth plurality of metal layers 166 may be formed vertically between the metal layers being configured as a capacitor (e.g., the second plurality of metal layers 146 and the third plurality of metal layers 156 as shown in FIG. 2 and FIG. 4) and the conductive lines 176 in the fifth interconnect level 170. In examples (not shown) where the structures shown in FIG. 2 and FIG. 4 are modified to omit the third interconnect level 150, the fourth interconnect level 160 (and the fourth plurality of metal layers 166) may be formed immediately above the second interconnect level (and the second plurality of metal layers 146) and formed immediately below the fifth interconnect level 170 (and the conductive lines 176).

Referring to FIG. 1 and FIG. 2, each metal layer 136a, 136b in the first plurality of metal layers 136 may be only aligned vertically below each metal line 146a, 146c in the first set of metal lines of the second plurality of metal layers 146. Each metal line 146b, 146d in the second set of metal lines of the second plurality of metal layers 146 may be only aligned vertically above the dielectric layer 134 in the first interconnect level 130 or above the one or more dielectric material contained in the first interconnect level 130. Advantageously, by only vertically aligning each metal layer 136a, 136b in the first plurality of metal layers 136 with each metal line 146a, 146c in the first set of metal lines of the second plurality of metal layers 146, each metal line 146b, 146d in the second set of metal lines of the second plurality of metal layers 146 can be only vertically aligned with dielectric material in the first interconnect level 130 and cannot be vertically aligned over any metal or conductive material in the first interconnect level 130 (such as metal layers 136a, 136b).

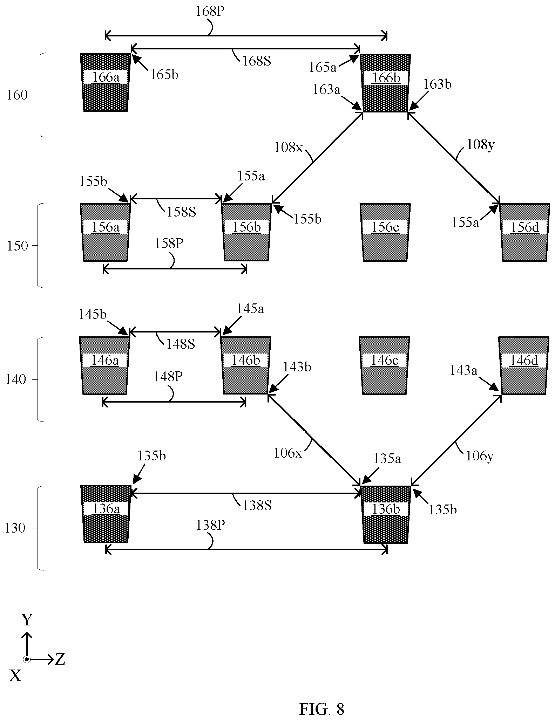

Referring to FIG. 7 and FIG. 8 together with FIG. 1 and FIG 2, respectively, each metal layer in the first plurality of metal layers may be positioned equidistant to two adjacent metal lines in the second set of metal lines of the second plurality of metal layers. As an illustration, the metal layer 136b in the first plurality of metal layers 136 may be only aligned vertically below metal line 146c in the first set of metal lines 146a, 146c of the second plurality of metal layers 146 and may be positioned equidistant to two adjacent metal lines 146b and 146d in the second set of metal lines 146b, 146d of the second plurality of metal layers 146. The metal line 146c in the first of metal lines 146a, 146c that is being aligned vertically above the metal layer 136b in the first plurality of metal layers 136 may be positioned immediately and laterally between the two adjacent metal lines 146b and 146d. As shown in FIG. 7 and FIG. 8, the positioning of metal layer 136b as being equidistant to the two adjacent metal lines 146b, 146d may refer to a distance 106x between the top edge 135a of the metal layer 136b in the first interconnect level 130 and the bottom edge 143b of the metal line 146b in the second interconnect level 140 being substantially equal to a distance 106y between the top edge 135b of the metal layer 136b in the first interconnect level 130 and the bottom edge 143a of the metal line 146d in the second interconnect level 140.

Each metal layer in the first plurality of metal layers may be spaced apart from an immediately adjacent metal layer in the first plurality of metal layers by a lateral distance (e.g., line spacing 138S), the lateral distance being greater than the line width of each metal layer in the second plurality of metal layers. The lateral distance (e.g., line spacing 138S) that spaces apart two immediately adjacent metal layer in the first plurality of metal layers may be greater than a sum of the line spacing in the second plurality of metal layers and the line width of each metal layer in the second plurality of metal layers. For example, as shown in FIG. 7 and FIG. 8, the line spacing 138S and the line pitch 138P in the first plurality of metal layers 136 may be larger than the line spacing 148S and the line pitch 148P in the second plurality of metal layers 146, respectively. The line spacing 138S in the first plurality of metal layers 136 may be greater than a sum of the line width 146W of each metal layer 146a, 146b, 146c, 146d in the second plurality of metal layers 146 and the line spacing 148S in the second plurality of metal layers 146. The line spacing 138S in the first plurality of metal layers 136 may be substantially equal to a sum of the line width 146W of each metal layer 146a, 146b, 146c, 146d in the second plurality of metal layers 146 and two times the line spacing 148S in the second plurality of metal layers 146. The line pitch 138P in the first plurality of metal layers 136 may be two times the line pitch 148P in the second plurality of metal layers 146.

Referring to FIG. 2, in embodiments where the metal layers 166a, 166b in the fourth plurality of metal layers 166 are electrically inactive, each metal layer 166a, 166b in the fourth plurality of metal layers 166 may be only aligned vertically above each metal line 146a, 146c in the first set of metal lines of the second plurality of metal layers 146. Each metal line 146b, 146d in the second set of metal lines of the second plurality of metal layers 146 may be only aligned vertically below the dielectric layer 164 in the fourth interconnect level 160 or below the one or more dielectric material contained in the fourth interconnect level 160. Advantageously, by only vertically aligning each metal layer 166a, 166b in the fourth plurality of metal layers 166 with each metal line 146a, 146c in the first set of metal lines of the second plurality of metal layers 146, each metal line 146b, 146d in the second set of metal lines of the second plurality of metal layers 146 can be only vertically aligned below the dielectric material in the fourth interconnect level 160 and cannot be vertically aligned below any metal or conductive material in the fourth interconnect level 160 (such as metal layers 166a, 166b). The metal layers 166a, 166b in the fourth plurality of metal layers 166 may be in vertical alignment with the metal layers 136a, 136b in the first plurality of metal layers 136.

Referring to FIG. 8 with FIG. 2, each metal layer in the fourth plurality of metal layers may be only aligned vertically above each metal line in the third set of metal lines of the second plurality of metal layers and each metal layer in the fourth plurality of metal layers may also be positioned equidistant to two adjacent metal lines in the fourth set of metal lines of the second plurality of metal layers. As an illustration, the metal layer 166b in the fourth plurality of metal layers 166 may be only aligned vertically above the metal line 156c in the third set of metal lines 156a, 156c of the third plurality of metal layers 156 and may be positioned equidistant to two adjacent metal lines 156b and 156d in the third set of metal lines 156b, 156d of the third plurality of metal layers 156. The metal line 156c in the first of metal lines 156a, 156c that is being aligned vertically below the metal layer 166b in the fourth plurality of metal layers 166 may be positioned immediately and laterally between the two adjacent metal lines 156b and 156d. As shown in FIG. 8, the positioning of metal layer 166b as being equidistant to the two adjacent metal lines 156b, 156d may refer to a distance 108x between the bottom edge 163a of the metal layer 166b in the fourth interconnect level 160 and the top edge 155b of the metal line 156b in the third interconnect level 150 being substantially equal to a distance 108y between the bottom edge 163b of the metal layer 166b in the fourth interconnect level 160 and the top edge 155a of the metal line 156d in the third interconnect level 150.

Each metal layer in the fourth plurality of metal layers may be spaced apart from an immediately adjacent metal layer in the fourth plurality of metal layers by a lateral distance (e.g., line spacing 168S), the lateral distance being greater than the line width of each metal layer in the third plurality of metal layers. The lateral distance (e.g., line spacing 138S) that spaces apart two immediately adjacent metal layer in the fourth plurality of metal layers may be greater than a sum of the line spacing in the third plurality of metal layers and the line width of each metal layer in the third plurality of metal layers. For example, as shown in FIG. 8, the line spacing 168S and the line pitch 168P in the fourth plurality of metal layers 166 may be larger than the line spacing 158S and the line pitch 158P in the third plurality of metal layers 156, respectively. The line spacing 168S in the fourth plurality of metal layers 166 may be greater than a sum of the line width 156W of each metal layer 156a, 156b, 156c, 156d in the third plurality of metal layers and the line spacing 158S in the third plurality of metal layers 156. The line spacing 168S in the fourth plurality of metal layers 166 may be substantially equal to a sum of the line width 156W of each metal layer 156a, 156b, 156c, 156d in the third plurality of metal layers 156 and two times the line spacing 158S in the third plurality of metal layers 156. The line pitch 168P in the fourth plurality of metal layers 166 may be two times the line pitch 158P in the third plurality of metal layers 156.

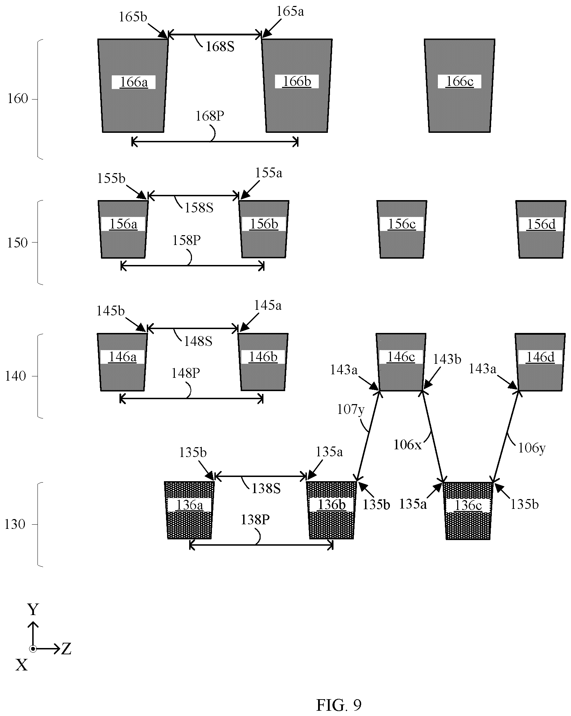

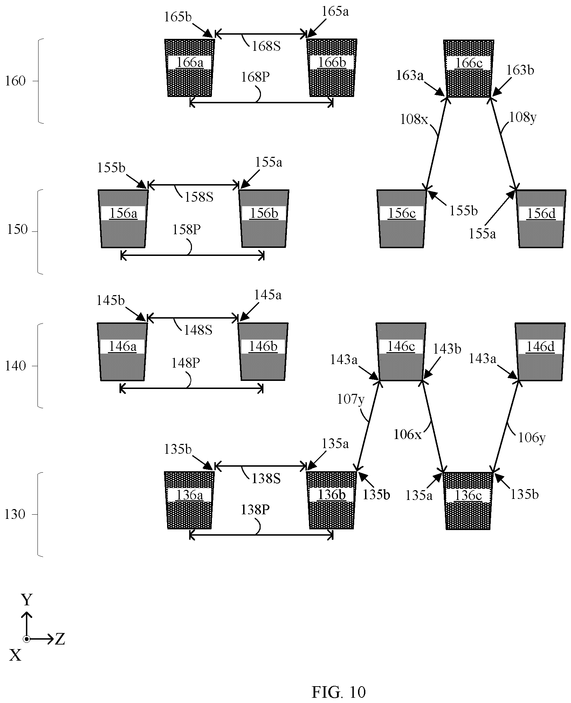

Referring to FIG. 9 and FIG. 10 together with FIG. 3 and FIG. 4, each metal layer in the first plurality of metal layers may be positioned equidistant to two immediately adjacent metal layers in the second plurality of metal layers. As an illustration, the metal layer 136c in the first plurality of metal layers 136 may be positioned equidistant to two immediately adjacent metal layers 146c and 146d in the second plurality of metal layers 146. As shown in FIG. 9 and FIG. 10, the positioning of metal layer 136c as being equidistant to the two immediately adjacent metal layers 146c, 146d may refer to a distance 106x between the bottom edge 143b of the metal layer 146c in the second interconnect level 140 and the top edge 135a of the metal layer 136c in the first interconnect level 130 being substantially equal to a distance 106y between the bottom edge 143a of the metal layer 146d in the second interconnect level 140 and the top edge 135b of the metal layer 136c in the first interconnect level 130.

Likewise, each metal layer in the second plurality of metal layers may be positioned equidistant to two immediately adjacent metal layers in the first plurality of metal layers. As an illustration, the metal layer 146c in the second plurality of metal layers 146 may be positioned equidistant to two immediately adjacent metal layers 136b and 136c in the first plurality of metal layers 136. As shown in FIG. 9 and FIG. 10, the positioning of metal layer 146c as being equidistant to the two immediately adjacent metal layers 136b, 136c may refer to a distance 106x between the bottom edge 143b of the metal layer 146c in the second interconnect level 140 and the top edge 135a of the metal layer 136c in the first interconnect level 130 being substantially equal to a distance 107y between the bottom edge 143a of the metal layer 146c in the second interconnect level 140 and the top edge 135b of the metal layer 136b in the first interconnect level 130.

Advantageously, by having each metal layer in the first plurality of metal layers be positioned equidistant to two immediately adjacent metal layers in the second plurality of metal layers, or having each metal layer in the second plurality of metal layers be positioned equidistant to two immediately adjacent metal layers in the first plurality of metal layers, it is found that each metal layer 146a, 146b, 146c, 146d in the second plurality of metal layers 146 can be only vertically aligned above the dielectric layer 134 that is laterally between two immediately adjacent metal layers in the first plurality of metal layers 136, and cannot be vertically aligned over any metal or conductive material in the first interconnect level 130 (such as metal layers 136a, 136b, 136c). Similarly, it is found that each metal layer 136a, 136b, 136c in the first plurality of metal layers 136 can be only vertically aligned below the dielectric layer 144 that is laterally between two immediately adjacent metal layers in the second plurality of metal layers 146, and cannot be vertically aligned below any metal or conductive material in the second interconnect level 140 (such as metal layers 146a, 146b, 146c, 146d).

Each metal layer in the first plurality of metal layers may be spaced apart from an immediately adjacent metal layer in the first plurality of metal layers by a lateral distance (e.g., line spacing 138S), the lateral distance being greater than the line width of each metal layer in the second plurality of metal layers. For example, as shown in FIG. 9 and FIG. 10 together with FIG. 6B, the line spacing 138S and the line pitch 138P in the first plurality of metal layers 136 may be greater than the line width 146W of each metal layer 146a, 146b, 146c, 146d in the second plurality of metal layers 146. Likewise, as shown in FIG. 9 and FIG. 10 together with FIG. 6A, the line spacing 148S and the line pitch 148P in the second plurality of metal layers 146 may be greater than the line width 136W of each metal layer 136a, 136b, 136c in the first plurality of metal layers 136.

Referring to FIG. 10 with FIG. 4, in embodiments where the metal layers 166a, 166b in the fourth plurality of metal layers 166 are electrically inactive, each metal layer in the fourth plurality of metal layers may be positioned equidistant to two immediately adjacent metal layers in the third plurality of metal layers. As an illustration, the metal layer 166c in the fourth plurality of metal layers 166 may be positioned equidistant to two immediately adjacent metal layers 156c and 156d in the third plurality of metal layers 156. As shown in FIG. 10, the positioning of metal layer 166c as being equidistant to the two immediately adjacent metal layers 156c, 156d may refer to a distance 108x between the bottom edge 163a of the metal layer 166c in the fourth interconnect level 160 and the top edge 155b of the metal layer 156c in the third interconnect level 150 being substantially equal to a distance 108y between the bottom edge 163b of the metal layer 166c in the fourth interconnect level 160 and the top edge 155a of the metal layer 156d in the third interconnect level 150.

Advantageously, by having each metal layer in the fourth plurality of metal layers be positioned equidistant to two immediately adjacent metal layers in the third plurality of metal layers, it is found that each metal layer 166a, 166b, 166c in the fourth plurality of metal layers 166 can be only vertically aligned above the dielectric layer 154 that is laterally between two immediately adjacent metal layers in the third plurality of metal layers 156, and cannot be vertically aligned over any metal or conductive material in the third interconnect level 150 (such as metal layers 156a, 156b, 156c, 156d).

Each metal layer in the fourth plurality of metal layers may be spaced apart from an immediately adjacent metal layer in the fourth plurality of metal layers by a lateral distance (e.g., line spacing 168S), the lateral distance being greater than the line width of each metal layer in the second plurality of metal layers or the line width of each metal layer in the third plurality of metal layers. For example, as shown in FIG. 9 and FIG. 10 together with FIG. 6B, the line spacing 168S and the line pitch 168P in the fourth plurality of metal layers 166 may be greater than the line width 146W of each metal layer 146a, 146b, 146c, 146d in the second plurality of metal layers 146.

As disclosed herein, the metal layers in the first plurality of metal layers may be electrically inactive whereas the metal layers in the second plurality of metal layers may be configured as a capacitor or be biased with a voltage. The positioning of the first plurality of metal layers 136, which may be electrically inactive, in an interconnect level 130 vertically between the interconnect level 140 containing the second plurality of metal layers 146 and the interconnect level 120 containing the conductive lines 126 may advantageously prevent a breakdown between the metal layers 146a, 146b, 146c, 146d in the second plurality of metal layers 146 and the conductive lines 126 in the interconnect level 120. At the same time, the presence of the first plurality of metal layers 136 in the interconnect level 130 as opposed to having only dielectric materials in the interconnect level 130 may advantageously comply with the minimum density design rule of semiconductor fabrication while increasing design flexibility, reducing spacing rules between adjacent Pcells (i.e., without wasting board space between adjacent Pcells), and enabling a reduced circuit footprint.

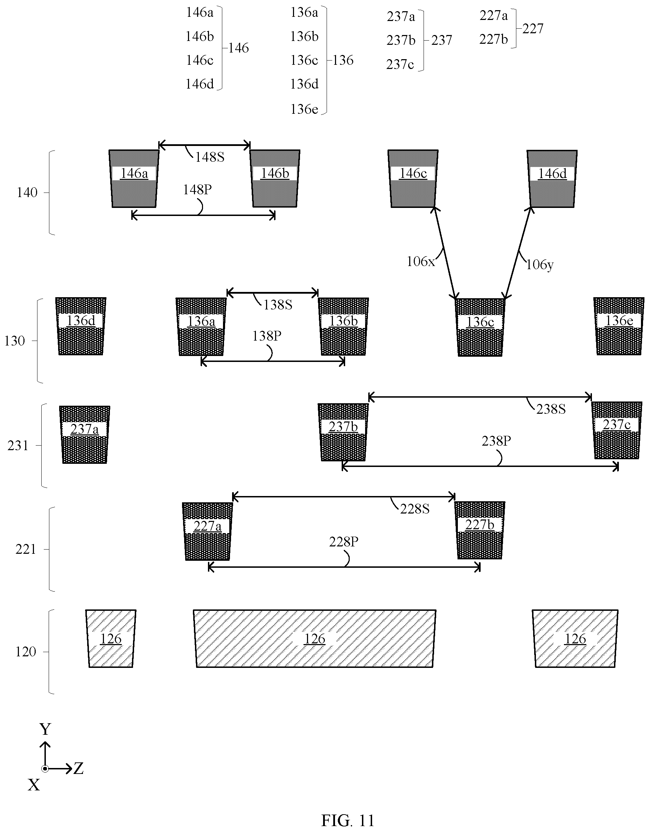

The embodiments illustrated in FIG. 9 and FIG. 10 may be modified to include multiple interconnect levels vertically between the interconnect level 140 and the interconnect level 120, in which each of the multiple interconnect levels contains electrically inactive metal layers. FIG. 11 illustrates an example of such a modification where multiple interconnect levels containing electrically inactive layers may be arranged vertically between the second plurality of metal layers 146 in the interconnect level 140 and the conductive lines 126 in the interconnect level 120. For simplicity, interconnect levels above interconnect level 140 are not shown.

Referring to FIG. 11, in which like reference numerals refer to like features in FIG. 9 and FIG. 10, interconnect levels 231 and 221 may be formed vertically between interconnect level 130 and interconnect level 120. The interconnect levels 221 and 231 may each include a plurality of metal layers 227 and 237, respectively. Each metal layer 237a, 237b, 237c, 227a, 227b in the respective plurality of metal layers 237 and 227 may be electrically inactive, similar to the metal layers 136a, 136b, 136c, 136d, 136e in the plurality of metal layers 136 in the interconnect level 130. Similar to the interconnect level 130, the interconnect levels 221 and 231 may each include one or more dielectric materials. The one or more dielectric materials in the respective interconnect levels 221 and 231 may be laterally between two immediately adjacent metal layers in the respective plurality of metal layers 227, 237.

The plurality of metal layers 227 may have a line spacing 228S and a line pitch 228P. The plurality of metal layers 237a, 237b, 237c may have a line spacing 238S and a line pitch 238P. The line pitch 228P of the plurality of metal layers 227 and the line pitch 238P of the plurality of metal layers 237 may be substantially equal to two times the line pitch 138P of the plurality of metal layers 136. The line spacing 228S of the plurality of metal layers 227 and the line spacing 238S of the plurality of metal layers 237 may individually be substantially equal to a sum of the line width 137W of each metal layer 136a, 136b, 136c, 136d, 136e in the plurality of metal layers 136 and two times the line spacing 138S in the plurality of metal layers 136. Each metal layer 237a, 237b, 237c in the plurality of metal layers 237 may not overlap with or be aligned vertically above each metal layer 227a, 227b in the plurality of metal layers 227. In other words, each metal layer 237a, 237b, 237c in the plurality of metal layers 237 may be vertically aligned above the one or more dielectric material laterally between two immediately adjacent metal layers in the plurality of metal layers 227.

Throughout this disclosure, it is to be understood that if a method is described herein as involving a series of steps, the order of such steps as presented herein is not necessarily the only order in which such steps may be performed, and certain of the stated steps may possibly be omitted and/or certain other steps not described herein may possibly be added to the method. Furthermore, the terms "comprise", "include", "have", and any variations thereof, are intended to cover a non-exclusive inclusion, such that a process, method, article, or device that comprises a list of elements is not necessarily limited to those elements, but may include other elements not expressly listed or inherent to such process, method, article, or device. Occurrences of the phrase "in an embodiment" herein do not necessarily all refer to the same embodiment.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein. Furthermore, there is no intention to be bound by any theory presented in the preceding background or the following detailed description. Additionally, the various tasks and processes described herein may be incorporated into a more comprehensive procedure or process having additional functionality not described in detail herein.

References herein to terms modified by language of approximation, such as "about", "approximately", and "substantially", are not to be limited to the precise value specified. The language of approximation may correspond to the precision of an instrument used to measure the value and, unless otherwise dependent on the precision of the instrument, may indicate +/- 10% of the stated value(s).

As will be readily apparent to those skilled in the art upon a complete reading of the present application, the disclosed structures in semiconductor devices and the methods of forming the structures in the semiconductor devices may be employed in manufacturing a variety of different integrated circuit products, including, but not limited to, logic devices, memory devices, radio frequency applications, high power applications, etc.

In summary, the subject matter of various embodiments generally relates to structures in semiconductor devices and integrated circuit (IC) chips. More particularly, the present disclosure relates to a metal-dielectric-metal capacitor having electrically inactive metal layers arranged in an interconnect level that is below another interconnect level containing two sets of metal lines interdigitated with each other. The following embodiments are explicitly disclosed.

### Embodiment 1:

A structure in a semiconductor device comprising:
a first interconnect level above a substrate;
a first plurality of metal layers in the first interconnect level, wherein the metal layers in the first plurality of metal layers are electrically inactive;
a second interconnect level above the first interconnect level; and
a second plurality of metal layers in the second interconnect level.

In some illustrative examples herein, the second plurality of metal layers may comprise a first set of metal lines interdigitated with a second set of metal lines.

Additionally or alternatively, each metal layer in the first plurality of metal layers may be only aligned vertically below each metal line in the first set of metal lines of the second plurality of metal layers or may be positioned equidistant to two immediately adjacent metal layers in the second plurality of metal layers.

### Embodiment 2:

The structure of embodiment 1, wherein the first set of metal lines is biased with a first voltage, the second set of metal lines is biased with a second voltage, the second voltage is higher than the first voltage.

### Embodiment 3:

The structure of embodiment 1 or 2, wherein the first interconnect level includes a first dielectric layer, the second interconnect level includes a second dielectric layer, the second dielectric layer in the second interconnect level is directly on the first dielectric layer in the first interconnect level, and the first dielectric layer includes a different dielectric material from the second dielectric layer.

### Embodiment 4:

The structure of embodiment 3, wherein each metal layer in the first plurality of metal layers is completely covered by and in direct contact with the first dielectric layer in the first interconnect level and the second dielectric layer in the second interconnect level.

### Embodiment 5:

The structure of embodiment 4, wherein the first dielectric layer in the first interconnect level is laterally between two immediately adjacent metal layers in the first plurality of metal layers.

### Embodiment 6:

The structure of embodiment 5, wherein each metal line in the second set of metal lines of the second plurality of metal layers is aligned vertically above the first dielectric layer in the first interconnect level.

### Embodiment 7:

The structure of embodiment 5 or 6, wherein each metal line in the second set of metal lines is equidistant to two immediately adjacent metal layers in the first plurality of metal layers.

### Embodiment 8:

The structure of one of embodiments 1 to 7, wherein each metal layer in the second plurality of metal layers has a line width, and each metal layer in the first plurality of metal layers is spaced apart from an immediately adjacent metal layer in the first plurality of metal layers by a lateral distance greater than the line width of each metal layer in the second plurality of metal layers.

### Embodiment 9:

The structure of embodiment 8, wherein the second plurality of metal layers has a line spacing, and the lateral distance that spaces apart two immediately adjacent metal layer in the first plurality of metal layers is greater than a sum of the line spacing of the second plurality of metal layers and the line width of each metal layer in the second plurality of metal layers.

### Embodiment 10:

The structure of one of embodiments 1 to 9, wherein the second interconnect level is immediately above the first interconnect level.

### Embodiment 11:

A structure in a semiconductor device comprising:
a first interconnect level above a substrate;
a first plurality of metal layers in the first interconnect level, wherein the metal layers in the first plurality of metal layers are electrically inactive;
a second interconnect level above the first interconnect level; and
a second plurality of metal layers in the second interconnect level,
wherein each metal layer in the first plurality of metal layers is positioned equidistant to two immediately adjacent metal layers in the second plurality of metal layers.

Embodiment 11 may depend on embodiment 1 in that the structure of embodiment 1 is further specified by each metal layer in the first plurality of metal layers being positioned equidistant to two immediately adjacent metal layers in the second plurality of metal layers. Accordingly, the subject matter of each of embodiments 2 to 10 may be individually combined in any way with embodiment 11.

### Embodiment 12:

The structure of embodiment 11, wherein each metal layer in the second plurality of metal layers has a line width, and each metal layer in the first plurality of metal layers is spaced apart from an immediately adjacent metal layer in the first plurality of metal layers by a lateral distance greater than the line width of each metal layer in the second plurality of metal layers.

### Embodiment 13:

The structure of embodiment 11 or 12, wherein the first interconnect level includes a first dielectric layer, the second interconnect level includes a second dielectric layer, the second dielectric layer in the second interconnect level is directly on the first dielectric layer in the first interconnect level, and the first dielectric layer includes a different dielectric material from the second dielectric layer.

### Embodiment 14:

The structure of embodiment 13, wherein each metal layer in the first plurality of metal layers is completely covered by and in direct contact with the first dielectric layer in the first interconnect level and the second dielectric layer in the second interconnect level.

### Embodiment 15:

The structure of embodiment 14, wherein the first dielectric layer in the first interconnect level is laterally between two immediately adjacent metal layers in the first plurality of metal layers.

### Embodiment 16:

The structure of embodiment 15, wherein each metal layer in the second plurality of metal layers is aligned vertically above the first dielectric layer in the first interconnect level.

### Embodiment 17:

The structure of one of embodiments 13 to 16, wherein the metal layers in the second plurality of metal layers are separated from each other by the second dielectric layer, and each metal layer in the first plurality of metal layers is only aligned vertically below the second dielectric layer.

### Embodiment 18:

18. The structure of one of embodiments 11 to 17, wherein each metal layer in the second plurality of metal layers is positioned equidistant to two immediately adjacent metal layers in the first plurality of metal layers.

### Embodiment 19:

The structure of one of embodiments 11 to 18, wherein the second plurality of metal layers comprises a first set of metal lines interdigitated with a second set of metal lines, the first set of metal lines are biased with a first voltage, the second set of metal lines are biased with a second voltage, wherein the second voltage is higher than the first voltage.

### Embodiment 20:

The structure of one of embodiments 11 to 19, wherein the second interconnect level is immediately above the first interconnect level.

## Claims

1. A structure in a semiconductor device, the structure comprising:
a first interconnect level above a substrate;
a first plurality of metal layers in the first interconnect level, wherein the metal layers in the first plurality of metal layers are electrically inactive;
a second interconnect level above the first interconnect level; and
a second plurality of metal layers in the second interconnect level,
wherein each metal layer in the first plurality of metal layers is at least one of:
only aligned vertically below each metal line in the first set of metal lines of the second plurality of metal layers, and
positioned equidistant to two immediately adjacent metal layers in the second plurality of metal layers.

2. The structure of claim 1, wherein the second plurality of metal layers comprises a first set of metal lines interdigitated with a second set of metal lines, and
wherein each metal layer in the first plurality of metal layers is only aligned vertically below each metal line in the first set of metal lines of the second plurality of metal layers.

3. The structure of claim 1 or 2, wherein the first set of metal lines is biased with a first voltage, the second set of metal lines is biased with a second voltage, the second voltage is higher than the first voltage, and/or
wherein the second interconnect level is immediately above the first interconnect level.

4. The structure of one of claims 1 to 3, wherein the first interconnect level includes a first dielectric layer, the second interconnect level includes a second dielectric layer, the second dielectric layer in the second interconnect level is directly on the first dielectric layer in the first interconnect level, and the first dielectric layer includes a different dielectric material from the second dielectric layer.

5. The structure of claim 4, wherein each metal layer in the first plurality of metal layers is completely covered by and in direct contact with the first dielectric layer in the first interconnect level and the second dielectric layer in the second interconnect level.

6. The structure of claim 5, wherein the first dielectric layer in the first interconnect level is laterally between two immediately adjacent metal layers in the first plurality of metal layers.

7. The structure of claim 6, wherein each metal line in the second set of metal lines of the second plurality of metal layers is aligned vertically above the first dielectric layer in the first interconnect level.

8. The structure of claim 6 or 7, wherein each metal line in the second set of metal lines is equidistant to two immediately adjacent metal layers in the first plurality of metal layers, and/or
wherein each metal layer in the second plurality of metal layers is aligned vertically above the first dielectric layer in the first interconnect level.

9. The structure of one of claims 1 to 7, wherein each metal layer in the second plurality of metal layers has a line width, and each metal layer in the first plurality of metal layers is spaced apart from an immediately adjacent metal layer in the first plurality of metal layers by a lateral distance greater than the line width of each metal layer in the second plurality of metal layers.

10. The structure of claim 9, wherein the second plurality of metal layers has a line spacing, and the lateral distance that spaces apart two immediately adjacent metal layer in the first plurality of metal layers is greater than a sum of the line spacing of the second plurality of metal layers and the line width of each metal layer in the second plurality of metal layers.

11. The structure of one of claims 1 to 10, wherein each metal layer in the first plurality of metal layers is positioned equidistant to two immediately adjacent metal layers in the second plurality of metal layers.

12. The structure of claim 11 in combination with claim 4, wherein the metal layers in the second plurality of metal layers are separated from each other by the second dielectric layer, and each metal layer in the first plurality of metal layers is only aligned vertically below the second dielectric layer.

13. The structure of claim 11 or 12, wherein each metal layer in the second plurality of metal layers is positioned equidistant to two immediately adjacent metal layers in the first plurality of metal layers.

14. The structure of one of claims 11 to 13, wherein the second plurality of metal layers comprises a first set of metal lines interdigitated with a second set of metal lines, the first set of metal lines are biased with a first voltage, the second set of metal lines are biased with a second voltage, wherein the second voltage is higher than the first voltage.
